# EUROPEAN PATENT APPLICATION

(11) **EP 4 756 234 A1**
(43) Date of publication of application: **10.06.2026**
(21) Application number: 24307026.5
(22) Date of filing: 04.12.2024
(51) Int. Cl.: F04D 15/00, F24D 19/10, F04D 29/42

(54) **CIRCULATION PUMP AND HVAC APPLIANCE**

(71) Applicant: Wilo Intec, 18700 Aubigny sur Nere (FR)
(72) Inventor: GONZALEZ, Philippe, 18700 Aubigny-sur-Nère (FR); GERMAIN, Eric, 18700 Aubigny-sur-Nère (FR); SIMON, Jérome, 18700 Aubigny-sur-Nère (FR)
(74) Representative: Schwöbel, Thilo K.

(57) **Abstract**

The invention relates to a
Circulation pump comprising
-- a pump housing with an impeller therein, the impeller being rotatable around a rotation axis of the pump,
-- a motor housing with an electric motor therein, the electric motor being coaxially connected to and driving the impeller,
-- a terminal box with electrical and/or electronical components therein for controlling the electric motor,
-- a flow sensor for measuring flow rate, especially volumetric flow rate or mass flow rate, of a pumped medium,

characterized in that the circulation pump comprises a flow sensor housing part,
wherein the flow sensor is connected to the flow sensor housing part,
wherein especially the flow sensor housing part is integrally formed with the pump housing, or
wherein the flow sensor housing part and the pump housing are realized as two connected pieces.

The invention further relates to an HVAC appliance.

## Description

The present invention relates to a circulation pump with a pump housing, a motor housing, a terminal box and a flow sensor. The present invention further relates to an HVAC (Heating, Ventilation, Air Conditioning) appliance comprising such a circulation pump.

### BACKGROUND OF THE INVENTION

Circulation pumps are well known and are nowadays used, for instance, in heating systems of industrial applications as well as private households. In such applications, a variety of different sensors can be employed, especially one or multiple flow sensors. Furthermore, for measuring heat quantities, the provision of one or multiple temperature sensors can be necessary. Usually, a flow sensor is arranged at an outlet of a corresponding circulation pump, wherein the flow sensor is configured as a standalone sensor. In other words, the flow sensor is a separately configured flow sensor that is distanced or spaced apart from the circulation pump, the separate flow sensor comprising a separate housing. However, due to the distance between the circulation pump and the flow sensor, the entire system comprising the circulation pump and the flow sensor takes up a relatively large volume which can be detrimental since the installation of such systems occurs often in narrow spaces as it is integrated inside a compact complete heating application. As a result, access to the circulation pump be impeded.

### SUMMARY OF THE INVENTION

An object of the present invention is to provide an optimized, especially a more compact, solution for a circulation pump. This object is achieved by a circulation pump comprising
-- a pump housing with an impeller therein, the impeller being rotatable around a rotation axis of the pump,
-- a motor housing with an electric motor therein, the electric motor being coaxially connected to and driving the impeller,
-- a terminal box with electrical and/or electronical components therein for controlling the electric motor,
-- a flow sensor for measuring flow rate, especially volumetric flow rate or mass flow rate, of a pumped medium,
wherein the circulation pump comprises a flow sensor housing part, wherein the flow sensor is connected to the flow sensor housing part,
wherein especially the flow sensor housing part is integrally formed with the pump housing, or
wherein the flow sensor housing part and the pump housing are realized as two connected pieces.

By means of the inventive circulation pump, a compact solution is provided. A distance between the circulation pump and a standalone flow sensor is avoided since the flow sensor can be advantageously accommodated within the pump housing. In other words, the flow sensor can be integrated into the pump housing. As a result, the volume taken up by the circulation pump and the flow sensor can be minimized and a more compact solution is provided. Moreover, additional housing materials otherwise employed for a separate pump housing can be saved or reduced by integrating the flow sensor into an existent pump housing. Preferably, the flow sensor housing part and the pump housing are realized as two connected pieces, wherein the two connected pieces can be connected to each other by means of bolts or a clip connection. It is thereby advantageously possible to easily and quickly open, remove, close and/or reconnect the flow sensor housing part mechanically to and from the remainder of the pump housing. Easy and fast opening and closing in turn enables quick and hence efficient maintenance, especially exchange of the flow sensor, for instance in case of a technical deficiency of the flow sensor. Preferably, the flow sensor housing part and the pump housing are manufactured by the same material, for instance a plastic and/or composite material, in particular a fiber-reinforced plastic.

According to an advantageous embodiment of the invention, the flow sensor is an ultrasonic sensor or a flow sensor of any other technology. Using an ultrasonic sensor has the advantage of measuring flow rates over a large operative flow range. Furthermore, an ultrasonic sensor is advantageous as it does not comprise any moving parts. Therefore, an ultrasonic sensor is robust. Instead of the flow sensor, it is also possible that another kind of sensor is used or provided, such as a vortex sensor or a turbine sensor.

In a preferred embodiment of the invention, the circulation pump, especially the flow sensor thereof, comprises a temperature sensor.

Preferably, the flow sensor housing part is located adjacent to the pump housing and especially in straight extension to the pump housing outlet or inlet,
wherein especially the pumped medium moves straight through the flow sensor housing part, preferably at least over a distance of at least 10 cm. For precise measurements, straightening the flow before the pumped medium flows through the flow sensor is crucial as a homogeneous velocity distribution of the pumped medium within the piping section prior to or upstream of a flow sensor inlet results in an enhanced measurement by the flow sensor. Therefore, in many cases, a straight pipe is arranged between a circulation pump outlet or inlet and the flow sensor. In other words, for realistic and good results, a specific distance between the circulation pump and the flow sensor is often necessary and advantageous.

According to a preferred embodiment of the invention, the flow sensor is configured to provide sensor raw data of the flow rate to a compensation module or functionality, wherein the compensation module or functionality is configured to provide - based on the sensor raw data and based on motor data, especially motor speed data - compensated flow rate data of the pumped medium. A compensation module within the meaning of the invention is especially hardware, wherein a functionality especially means software. Furthermore, for a variety of reasons, sensor raw data can be flawed, that is there can be a discrepancy between the real (physical) flow rate within the piping and the data measured by the sensor. Compensated flow rate data is optimized or enhanced sensor raw data, wherein optimization or enhancement means that the (physical) flow rate is best approximated by considering further pump parameters such as motor speed data. The compensation procedure can be carried out by considering empirical data. As a result, (standard) deviation or variance between the compensated flow rate and the flow rate is smaller than (standard) deviation or variance between the compensated flow rate and the sensor raw data.

In a preferred embodiment of the invention, the circulation pump comprises or is connected to a bus system - especially a LIN bus, local Interconnect Network bus, or a MOD bus or a CAN bus - that is configured to send or to transfer the sensor raw data to the compensation module or functionality.

According to an advantageous embodiment of the invention, the compensation module or functionality is, or is part of, a pump control unit, PCU, or a separated compensation module or functionality. The compensation module can be a standalone module, that is a separately configured module. However, it is also conceivable that the circulation pump comprises the compensation module. For instance and preferably, the circulation pump can comprise a pump control unit that is the compensation module.

Preferably, the pump control unit, PCU, is configured to provide - based on the compensated flow rate data of the pumped medium and on a temperature sensor information, especially provided by the flow sensor - a heat quantity information related to the heat quantity supplied by the medium.

Another object of the invention is an HVAC appliance comprising a compensation module or functionality and a circulation pump according to any one of the aforementioned embodiments, wherein
the flow sensor is configured to provide sensor raw data of the flow rate to the compensation module or functionality, and
a pump control unit, PCU, is configured to provide motor data to the compensation module or functionality,
wherein the compensation module or functionality is configured to provide - based on the provided sensor raw data and based on the motor data, especially motor speed data - compensated flow rate data of the pumped medium. An advantage of an inventive HVAC appliance is that the compensation module or functionality can be separate from the circulation pump. It is thereby advantageously possible to provide a pump that can be employed in a variety of different applications or appliances, wherein the appliance comprises its own appliance control unit, ACU. As a result, an appliance proprietor can control its own data without having to rely on the pump provider and the pumps own pump control unit. The data sovereignty thus remains in the hands of the appliance owner.

According to a preferred embodiment of the invention, the HVAC appliance comprises or is connected to a bus system - especially a LIN bus, local Interconnect Network bus, or a MOD bus or a CAN bus - that is configured to send or to transfer the sensor raw data and/or the motor data to the compensation module or functionality.

Preferably, the compensation module or functionality is, or is part of, an appliance control unit, ACU, or a separated compensation module or functionality. The transformation or conversion of sensor raw data into compensated flow rate data and/or the calculation of the compensated flow rate data can be carried out in or by the appliance control unit, ACU. However, it is conceivable that the HVAC appliance comprises a separately configured compensation module, especially separate from the appliance control unit, ACU. Communication between a separate compensation module and the appliance control unit, ACU, can be carried out by means of a bus system, especially a LIN bus, local Interconnect Network bus, or a MOD bus or a CAN bus.

In an advantageous embodiment of the invention, the compensation module or functionality or the appliance control unit, ACU, is configured to provide - based on the compensated flow rate of the pumped medium and on a temperature sensor information, especially provided by the flow sensor- heat quantity supplied by the medium.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically and exemplarily illustrates in a perspective view a first embodiment of an inventive circulation pump comprising a pump housing, a flow sensor and a flow sensor housing part, wherein especially the flow sensor housing part is integrally formed with the pump housing
Figure 2a schematically illustrates that the flow sensor is configured to provide sensor raw data of the flow rate to a pump control unit, PCU, serving as a compensation module, wherein the PCU is configured to provide - based on the sensor raw data and based on motor speed data - compensated flow rate data of the pumped medium.
Figure 2b schematically illustrates an inventive HVAC appliance, wherein the flow sensor is configured to provide sensor raw data of the flow rate to an appliance control unit, ATU, serving as a compensation module, and wherein a pump control unit, PCU, is configured to provide motor speed data to the ACU, wherein the ACU is configured to provide - based on the provided sensor raw data and based on the motor speed data - compensated flow rate data of the pumped medium.
Figure 3a schematically and exemplarily illustrates sensor raw data provided by the flow sensor and compensated flow rate data provided by a compensation module in a respectively simplified graphical representation.
Figure 3b schematically and exemplarily illustrates sensor raw data provided by the flow sensor and compensated flow rate data provided by a compensation module in a respective scatter diagram.
Figure 4 schematically and exemplarily illustrates a bus system architecture of the HVAC appliance from figure 2b.

### DETAILED DESCRIPTION OF THE DRAWINGS

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

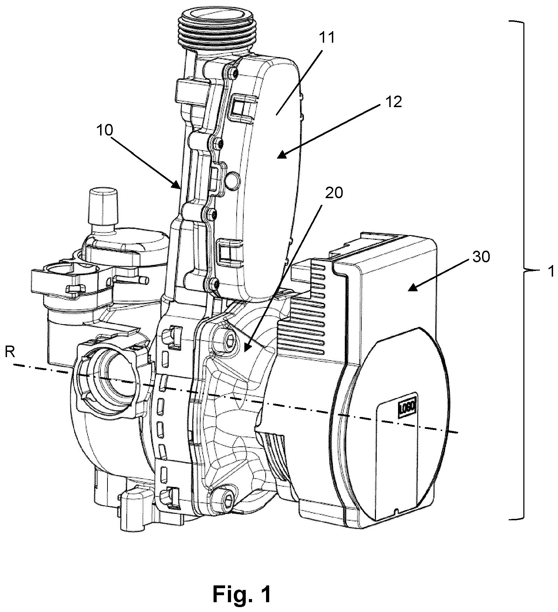

**Figure 1** schematically and exemplarily illustrates in a perspective view a first embodiment of an inventive circulation pump 1 comprising a pump housing 10, a flow sensor 12 and a flow sensor housing part 11, wherein the pump housing 10 and the flow sensor housing part 11 are realized as two connected pieces. The circulation pump 1 comprises
-- a pump housing 10 with an impeller therein, the impeller being rotatable around a rotation axis R of the pump 1 wherein especially the flow sensor housing part 11 is integrally formed with the pump housing 10,
-- a motor housing 20 with an electric motor therein, the electric motor being coaxially connected to and driving the impeller,
-- a terminal box 30 with electrical and/or electronical components therein for controlling the electric motor,
-- a flow sensor 12 for measuring flow rate of a pumped medium.The circulation pump 1 further comprises a flow sensor housing part 11, wherein the flow sensor 12 is connected to the flow sensor housing part 11. The flow sensor 12 is not visible in figure 1 since the flow sensor housing part 11 serves as a cover for the flow sensor 12. In other words, the flow sensor 12 is arranged inside the flow sensor housing part 11, or, with respect to the perspective shown in figure 1, behind the flow sensor housing part 11. According to the invention, the flow sensor housing part 11 and the pump housing 10 can be realized in a single part as illustrated as an example in Fig 1 or realized as two connected pieces. In other words, in that 2^{nd} case the flow sensor housing part 11 and the pump housing 10 are two separate elements. The flow sensor housing part 11 is connected to the pump housing 10 by means of bolts, four of which can be seen in figure 1. Such an embodiment of the circulation pump 1 has the advantage that the flow sensor housing part 11 can be easily and quickly removed from the circulation pump 1. Furthermore, such an embodiment allows for close arrangement of the flow sensor 12 to the circulation pump 1. In other words, according to the inventive circulation pump 1, a compact solution is provided as the flow sensor 12 is not spaced apart in a great distance to the rest of the pump 1.

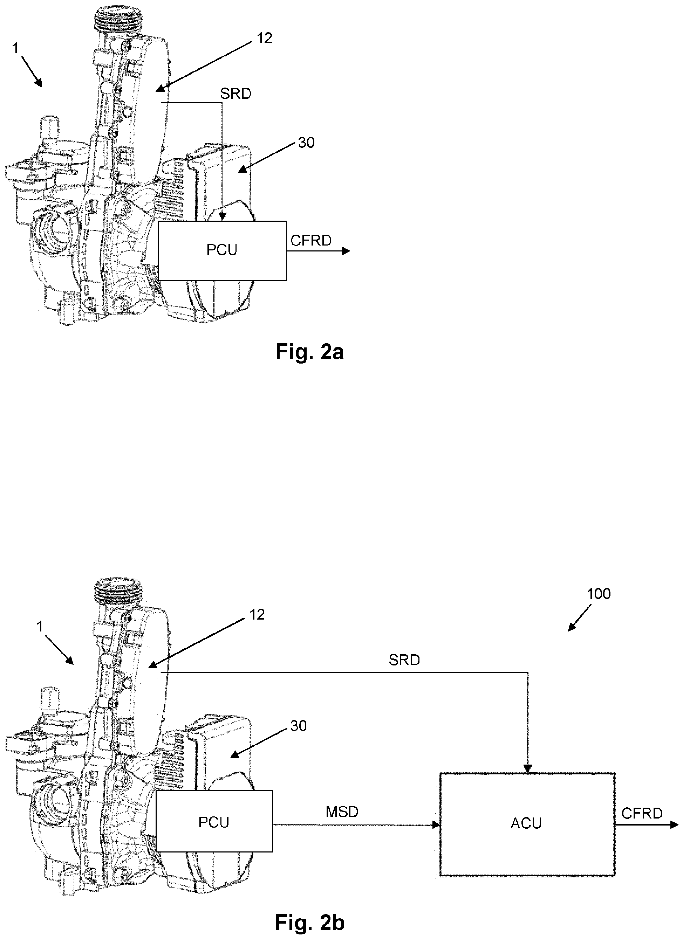

**Figure 2a** schematically illustrates that the flow sensor 12 is configured to provide sensor raw data SRD of the flow rate to a pump control unit, PCU, serving as a compensation module, wherein the PCU is configured to provide - based on the sensor raw data SRD and based on motor speed data MSD - compensated flow rate data CFRD of the pumped medium. The pump control unit, PCU, is arranged inside the terminal box 30, along with the rest of electrical and/or electronical components. The compensated flow rate data CFRD could, for instance, visualized in a monitor of the terminal box 30, giving an operator the possibility to see in real time the flow rate of the pumped medium.

**Figure 2b** schematically illustrates an inventive HVAC appliance 100, wherein the flow sensor 12 is configured to provide sensor raw data SRD of the flow rate to an appliance control unit, ACU, serving as a compensation module, and wherein a pump control unit, PCU, is configured to provide motor speed data MSD to the ACU, wherein the ACU is configured to provide - based on the provided sensor raw data SRD and based on the motor speed data MSD - compensated flow rate data CFRD of the pumped medium.

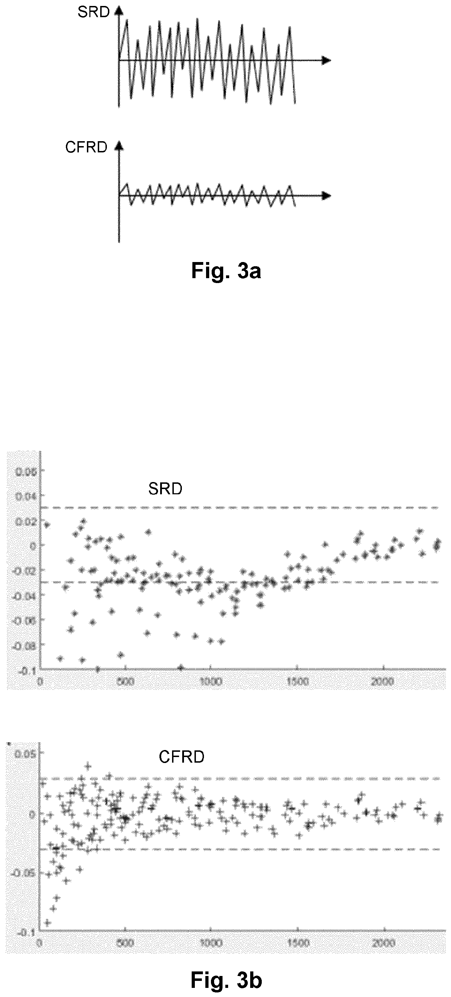

**Figure 3a** schematically and exemplarily illustrates sensor raw data SRD provided by the flow sensor 12 and compensated flow rate data CFRD provided by a compensation module in a respectively simplified graphical representation. The compensation module can be a pump control unit, PCU, or an appliance control unit, ACU. It is obvious from figure 3a that the (standard) deviation or variance of the compensated flow rate data CFRD is smaller than the (standard) deviation or variance of the sensor raw data SRD. In other words, compensation of the sensor raw data SRD results in a greater accuracy and therefore provides a more precise approximation of the real (physical) flow rate of the pumped medium.

**Figure 3b** schematically and exemplarily illustrates sensor raw data SRD provided by the flow sensor 12 and compensated flow rate data CFRD provided by a compensation module in a respective scatter diagram. The abscissae of both diagrams refer respectively to a volumetric flow rate of the pumped medium in liters per hour. The ordinates refer to a relative error of the measurement (sensor raw data SRD) or calculation/compensation (of the compensated flow rate data CFRD), relative to the real/physical flow rate of the pumped medium. A comparison of both diagrams reveals that the compensated flow rate data CFRD goes along with a smaller deviation with respect to the flow rate of the pumped medium. In other words, by means of compensation of the sensor raw data SRD, more realistic data in form of the compensated flow rate data CFRD can be provided. The compensation or its corrective effects are especially evident when the volumetric flow rate is relatively small, for instance 500 l/h or 1000 l/h.

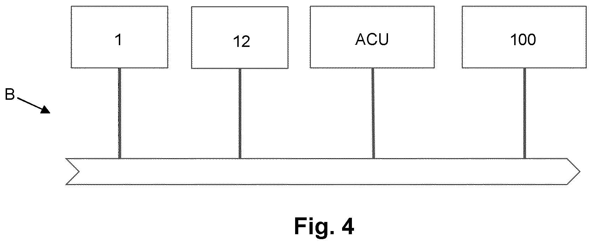

**Figure 4** schematically and exemplarily illustrates a bus system architecture of the HVAC appliance 100 from figure 2b. The circulation pump 1 and its components such as the pump control unit, PCU, can communicate with the appliance control unit, ACU, by means of a bus system B. For instance, the pump control unit, PCU, can transfer motor data of the electric motor, especially motor speed data MSD, to the appliance control unit, ACU, by means of the bus system B. Likewise, the flow sensor 12 can forward signals to the appliance control unit, ACU. Figure 4 is to be understood schematically. For instance, the appliance control unit, ACU, and the appliance 100 are illustrated as separated blocks as though the appliance comprises the appliance control unit, ACU.

### Reference signs

- 1: Circulation pump

- 10: Pump housing
- 11: Flow sensor housing part
- 12: Flow sensor
- 20: Motor housing
- 30: Terminal box

- 100: HVAC appliance

- ACU: Appliance control unit
- B: Bus system
- CFRD: Compensated flow rate data
- MSD: Motor speed data
- PCU: Pump control unit
- SRD: Sensor raw data

## Claims

1. Circulation pump (1) comprising
-- a pump housing (10) with an impeller therein, the impeller being rotatable around a rotation axis (R) of the pump (1),
-- a motor housing (20) with an electric motor therein, the electric motor being coaxially connected to and driving the impeller,
-- a terminal box (30) with electrical and/or electronical components therein for controlling the electric motor,
-- a flow sensor (12) for measuring flow rate, especially volumetric flow rate or mass flow rate, of a pumped medium,
**characterized in that** the circulation pump (1) comprises a flow sensor housing part (11), wherein the flow sensor (12) is connected to the flow sensor housing part (11),
wherein especially the flow sensor housing part (11) is integrally formed with the pump housing (10), or
wherein the flow sensor housing part (11) and the pump housing (10) are realized as two connected pieces.

2. Circulation pump (1) according to claim 1, **characterized in that** the flow sensor (12) is an ultrasonic sensor or a flow sensor of any other technology.

3. Circulation pump (1) according to any one of the preceding claims, **characterized in that** the circulation pump (1), especially the flow sensor (12) thereof, comprises a temperature sensor.

4. Circulation pump (1) according to one of the preceding claims, **characterized in that** the flow sensor housing part (11) is located adjacent to the pump housing (10) and especially in straight extension to the pump housing outlet or inlet, wherein especially the pumped medium moves straight through the flow sensor housing part (11), preferably at least over a distance of at least 10 cm.

5. Circulation pump (1) according to any one of the preceding claims, **characterized in that** the flow sensor (12) is configured to provide sensor raw data of the flow rate to a compensation module or functionality, wherein the compensation module or functionality is configured to provide - based on the sensor raw data and based on motor data, especially motor speed data - compensated flow rate data of the pumped medium.

6. Circulation pump (1) according to one of the preceding claims, **characterized by** comprising or being connected to a bus system - especially a LIN bus, local Interconnect Network bus, or a MOD bus or a CAN bus - that is configured to send or to transfer the sensor raw data to the compensation module or functionality.

7. Circulation pump (1) according to one of the preceding claims, **characterized in that** the compensation module or functionality is, or is part of, a pump control unit, PCU, or a separated compensation module or functionality.

8. Circulation pump (1) according to one of the preceding claims, **characterized in that** the pump control unit, PCU, is configured to provide - based on the compensated flow rate data of the pumped medium and on a temperature sensor information, especially provided by the flow sensor (12) - a heat quantity information related to the heat quantity supplied by the medium.

9. HVAC appliance (100) comprising a compensation module or functionality and a circulation pump (1) according to any one of claims 1 to 4, **characterized in that**
the flow sensor (12) is configured to provide sensor raw data of the flow rate to the compensation module or functionality, and
a pump control unit, PCU, is configured to provide motor data to the compensation module or functionality,
wherein the compensation module or functionality is configured to provide - based on the provided sensor raw data and based on the motor data, especially motor speed data - compensated flow rate data of the pumped medium.

10. HVAC appliance (100) according to claim 9, **characterized by** comprising or being connected to a bus system - especially a LIN bus, local Interconnect Network bus, or a MOD bus or a CAN bus - that is configured to send or to transfer the sensor raw data and/or the motor data to the compensation module or functionality.

11. HVAC appliance (100) according to claim 9 or 10, **characterized in that** the compensation module or functionality is, or is part of, an appliance control unit, ACU, or a separated compensation module or functionality.

12. HVAC appliance (100) according to claim 8 or 9, **characterized in that** the compensation module or functionality or the appliance control unit, ACU, is configured to provide - based on the compensated flow rate of the pumped medium and on a temperature sensor information, especially provided by the flow sensor (12) - heat quantity supplied by the medium.

## Amended claims

### Amended claims in accordance with Rule 137(2) EPC.

1. Circulation pump (1) comprising
-- a pump housing (10) with an impeller therein, the impeller being rotatable around a rotation axis (R) of the pump (1),
-- a motor housing (20) with an electric motor therein, the electric motor being coaxially connected to and driving the impeller,
-- a terminal box (30) with electrical and/or electronical components therein for controlling the electric motor,
-- a flow sensor (12) for measuring flow rate, especially volumetric flow rate or mass flow rate, of a pumped medium,
**characterized in that** the circulation pump (1) comprises a flow sensor housing part (11), wherein the flow sensor (12) is connected to the flow sensor housing part (11),
wherein especially the flow sensor housing part (11) is integrally formed with the pump housing (10), or
wherein the flow sensor housing part (11) and the pump housing (10) are realized as two connected pieces,
wherein the flow sensor housing part (11) is located adjacent to the pump housing (10) and in straight extension to the pump housing outlet or inlet, wherein the pumped medium moves straight through the flow sensor housing part (11), at least over a distance of at least 10 cm.

2. Circulation pump (1) according to claim 1, **characterized in that** the flow sensor (12) is an ultrasonic sensor or a flow sensor of any other technology.

3. Circulation pump (1) according to any one of the preceding claims, **characterized in that** the circulation pump (1), especially the flow sensor (12) thereof, comprises a temperature sensor.

4. Circulation pump (1) according to any one of the preceding claims, **characterized in that** the flow sensor (12) is configured to provide sensor raw data of the flow rate to a compensation module, wherein the compensation module is configured to provide - based on the sensor raw data and based on motor data, especially motor speed data - compensated flow rate data of the pumped medium.

5. Circulation pump (1) according to one of the preceding claims, **characterized by** comprising or being connected to a bus system - especially a LIN bus, local Interconnect Network bus, or a MOD bus or a CAN bus - that is configured to send or to transfer the sensor raw data to the compensation module.

6. Circulation pump (1) according to one of the preceding claims, **characterized in that** the compensation module is, or is part of, a pump control unit, PCU, or a separated compensation module.

7. Circulation pump (1) according to one of the preceding claims, **characterized in that** the pump control unit, PCU, is configured to provide - based on the compensated flow rate data of the pumped medium and on a temperature sensor information, especially provided by the flow sensor (12) - a heat quantity information related to the heat quantity supplied by the medium.

8. HVAC appliance (100) comprising a compensation module and a circulation pump (1) according to any one of claims 1 to 3, **characterized in that**
the flow sensor (12) is configured to provide sensor raw data of the flow rate to the compensation module, and
a pump control unit, PCU, is configured to provide motor data to the compensation module,
wherein the compensation module is configured to provide - based on the provided sensor raw data and based on the motor data, especially motor speed data - compensated flow rate data of the pumped medium.

9. HVAC appliance (100) according to claim 8, **characterized by** comprising or being connected to a bus system - especially a LIN bus, local Interconnect Network bus, or a MOD bus or a CAN bus - that is configured to send or to transfer the sensor raw data and/or the motor data to the compensation module.

10. HVAC appliance (100) according to claim 8 or 9, **characterized in that** the compensation module is, or is part of, an appliance control unit, ACU, or a separated compensation module.

11. HVAC appliance (100) according to claim 8 or 9, **characterized in that** the compensation module or the appliance control unit, ACU, is configured to provide - based on the compensated flow rate of the pumped medium and on a temperature sensor information, especially provided by the flow sensor (12) - heat quantity supplied by the medium.
